# EUROPEAN PATENT APPLICATION

(11) **EP 4 826 237 A2**
(43) Date of publication of application: **21.10.2026**
(21) Application number: 26173371.1
(22) Date of filing: 20.04.2026
(51) Int. Cl.: F02K 3/075, F02C 7/042

(54) **SPLITTER ASSEMBLY FOR A GAS TURBINE ENGINE OF AN AIRCRAFT PROPULSION SYSTEM**

(30) Priority: 18.04.2025 US 202519183510
(71) Applicant: RTX Corporation, Farmington, CT 06032 (US)
(72) Inventor: KUPRATIS, Daniel B., Wallingford, 06492 (US); HANRAHAN, Paul R., Sedona, 86351 (US)
(74) Representative: Dehns

(57) **Abstract**

A splitter assembly (60) for a gas turbine engine (22) includes a structure (62) and a valve (64). The structure (62) forms a cavity (78). The structure (62) includes an inner member (66) and an outer member (68). The inner member (66) and the outer member (68) extend circumferentially about an axis. The inner member (66) forms a first outlet (80) of the cavity (78). The outer member (68) forms a second outlet (92) of the cavity (78). The structure (62) forms an inlet (100) of the cavity (78) between the inner member (66) and the outer member (68). The valve (64) includes a plurality of cam members (104). The cam members (104) are arranged circumferentially about the axis. Each of the cam members (104) is positionable in an inner position, an outer position, and an intermediate position. The cam members (104) in the inner position obstruct an air flow path (124) from the inlet (100) to the first outlet (80). The cam members (104) in the outer position obstruct the air flow path (124) from the inlet (100) to the second outlet (92).

## Description

### BACKGROUND

### 1. Technical Field

This disclosure relates generally to aircraft propulsion systems and, more particularly, to a splitter assembly for a gas turbine engine.

### 2. Background Information

Various types and configurations of gas turbine engines for aircraft propulsion systems are known in the art, including those with splitter assemblies for separating inlet air flow into a core flow path and a bypass flow path. While these known aircraft propulsion systems may be suitable for their intended purposes, there is always room in the art for improvement.

### SUMMARY

According to an aspect of the present disclosure, a splitter assembly for a gas turbine engine of an aircraft propulsion system includes a splitter structure and a splitter valve. The splitter structure forms a splitter cavity. The splitter structure includes an inner structure member and an outer structure member. The inner structure member and the outer structure member extend circumferentially about an axis. The inner structure member includes a first leading edge relative to an air flow path through the splitter cavity. The inner structure member forms a first splitter outlet of the splitter cavity. The outer structure member is disposed radially outward of the inner structure member. The outer structure member includes a second leading edge. The outer structure member forms a second splitter outlet of the splitter cavity. The splitter structure forms a splitter inlet of the splitter cavity between the first leading edge and the second leading edge. The first splitter outlet is configured to be connected in fluid communication with a core flow path of the gas turbine engine radially inward of the splitter structure. The second splitter outlet configured to be connected in fluid communication with a bypass flow path of the gas turbine engine radially outward of the splitter structure. The splitter valve includes a plurality of cam members disposed within the splitter cavity. The plurality of cam members are arranged circumferentially about the axis. Each of the plurality of cam members is positionable in an inner radial position, an outer radial position, and an intermediate position between the inner radial position and the outer radial position. The plurality of cam members in the inner radial position obstruct the air flow path from the splitter inlet to the first splitter outlet. The plurality of cam members in the outer radial position obstruct the air flow path from the splitter inlet to the second splitter outlet.

In any of the aspects or examples described above and herein, the splitter assembly may be configured to direct air flow along the air flow path from the splitter inlet to both the first splitter outlet and the second splitter outlet with the plurality of cam members in the intermediate position.

In any of the aspects or examples described above and herein, the first leading edge may be disposed upstream of the second leading edge.

In any of the aspects or examples described above and herein, the splitter structure may further include a plurality of deswirling vanes arranged circumferentially about the axis, each of the plurality of deswirling vanes may extend between and connect the inner structure member and the outer structure member, and the plurality of deswirling vanes may be disposed between the splitter inlet and the plurality of cam members along the air flow path.

In any of the aspects or examples described above and herein, the splitter valve may further include an actuator operably coupled with each of the plurality of cam members, and the actuator may be operable to selectively position the plurality of cam members in the inner radial position, the outer radial position, or the intermediate position.

In any of the aspects or examples described above and herein, the actuator may be disposed within the splitter cavity.

In any of the aspects or examples described above and herein, the splitter assembly may further include a controller connected in signal communication with the actuator, the controller may include a processor connected in signal communication with a non-transitory memory storing instructions which, when executed by the processor, may cause the processor to control the actuator to position the plurality of cam members in the inner radial position in a first operating condition of the gas turbine engine and control the actuator to position the plurality of cam members in the outer radial position in a second operating condition of the gas turbine engine, and the second operating condition may be different than the first operating condition.

In any of the aspects or examples described above and herein, each of the plurality of cam members may include a protruding segment configured to be positioned at the first splitter outlet in the inner radial position and the second splitter outlet in the outer radial position.

According to another aspect of the present disclosure, a gas turbine engine for an aircraft propulsion system includes an engine core, a bypass flow path, and a splitter assembly. The engine core extends along an axis of the gas turbine engine. The engine core includes a compressor section, a combustor section, and a turbine section. The engine core forms a core flow path extending through the compressor section, the combustor section, and the turbine section. The bypass flow path is disposed radially outward of the engine core. The splitter assembly is disposed radially between and forming the core flow path and the bypass flow path. The splitter assembly includes a splitter structure and a splitter valve. The splitter structure extends circumferentially about the axis. The splitter structure forms a splitter cavity. The splitter structure further forms a splitter inlet, a first splitter outlet, and a second splitter outlet of the splitter cavity. The splitter inlet is disposed radially between the core flow path and the bypass flow path. The first splitter outlet is disposed at the core flow path. The second splitter outlet is disposed at the bypass flow path. The splitter valve includes a plurality of cam members disposed within the splitter cavity. The plurality of cam members are arranged circumferentially about the axis. Each of the plurality of cam members is positionable in an inner radial position, an outer radial position, and an intermediate position between the inner radial position and the outer radial position. The plurality of cam members in the inner radial position obstruct an air flow path through the splitter cavity from the splitter inlet to the first splitter outlet. The plurality of cam members in the outer radial position obstruct the air flow path through the splitter cavity from the splitter inlet to the second splitter outlet.

In any of the aspects or examples described above and herein, the splitter structure may include an inner structure member and an outer structure member, the inner structure member and the outer structure member may extend circumferentially about the axis, the inner structure member may form the core flow path, the outer structure member may form the bypass flow path, and the inner structure member and the outer structure member may collectively form the splitter cavity and the splitter inlet.

In any of the aspects or examples described above and herein, the inner structure member may include a first leading edge, the first leading edge may form a core flow path inlet of the core flow path, and the first splitter outlet may be connected in fluid communication with the core flow path downstream of the core flow path inlet.

In any of the aspects or examples described above and herein, the outer structure member may include a second leading edge, the second leading edge may form a bypass flow path inlet of the bypass flow path, and the second splitter outlet may be connected in fluid communication with the bypass flow path downstream of the bypass flow path inlet.

In any of the aspects or examples described above and herein, the splitter structure may include a plurality of struts extending between and connecting the inner structure member and the outer structure member, and each of the plurality of cam members may be rotatable mounted between a respective circumferentially-adjacent pair of the plurality of struts.

In any of the aspects or examples described above and herein, the splitter structure may further include a plurality of deswirling vanes arranged circumferentially about the axis, each of the plurality of deswirling vanes may extend between and connect the inner structure member and the outer structure member, and the plurality of deswirling vanes may be disposed between the splitter inlet and the plurality of cam members.

In any of the aspects or examples described above and herein, the splitter assembly may be configured to direct air flow through the splitter cavity from the splitter inlet to both the first splitter outlet and the second splitter outlet with the plurality of cam members in the intermediate position.

In any of the aspects or examples described above and herein, the first splitter outlet may include a plurality of first outlet passages arranged about the axis.

In any of the aspects or examples described above and herein, the second splitter outlet may include a plurality of second outlet passages arranged about the axis.

According to another aspect of the present disclosure, a method for operating a splitter assembly of a gas turbine engine for an aircraft propulsion system includes directing an air flow through a fan section and into a core flow path and a bypass flow path by rotating a bladed fan rotor, separating the air flow into the core flow path and the bypass flow path with the splitter assembly, and operating the splitter assembly to selectively direct a portion of the air flow from a splitter inlet of the splitter assembly to one or both of the core flow path or the bypass flow path. Selectively directing the portion of the air flow includes positioning a splitter valve of the splitter assembly to direct the portion of the air flow from the splitter inlet to one of the core flow path through a first splitter outlet of the splitter assembly, the bypass flow path through a second splitter outlet of the splitter assembly, and the core flow path and the bypass flow path through the first splitter outlet and the second splitter outlet, respectively.

In any of the aspects or examples described above and herein, operating the splitter assembly may include positioning the splitter valve to direct the portion of the air flow from the splitter inlet to the core flow path in a first operating condition of the aircraft propulsion system and positioning the splitter valve to direct the portion of the air flow from the splitter inlet to the bypass flow path in a second operating condition of the aircraft propulsion system.

In any of the aspects or examples described above and herein, the first operating condition may be a takeoff operating condition and the second operating condition may be a cruising operating condition.

The foregoing features and elements may be combined in various combinations without exclusivity, unless expressly indicated otherwise. For example, aspects and/or examples of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 schematically illustrates a cutaway, side view of an aircraft propulsion system including a gas turbine engine, in accordance with one or more embodiments of the present disclosure.
FIG. 2 schematically illustrates a cutaway, side view of a portion of the gas turbine engine and a splitter assembly including a splitter valve in a first position, in accordance with one or more embodiments of the present disclosure.
FIG. 3 schematically illustrates a cutaway, side view of the portion of the gas turbine engine and the splitter assembly with the splitter valve in a second position, in accordance with one or more embodiments of the present disclosure.
FIG. 4 schematically illustrates a cutaway, side view of the portion of the gas turbine engine and the splitter assembly with the splitter valve in a third position, in accordance with one or more embodiments of the present disclosure.
FIG. 5 schematically illustrates a cross-sectional view of a portion of the splitter assembly taken along Line 5-5 of FIG. 3, in accordance with one or more embodiments of the present disclosure.
FIG. 6 schematically illustrates a cutaway, side view of a portion of the gas turbine engine and another splitter assembly, in accordance with one or more embodiments of the present disclosure.

### DETAILED DESCRIPTION

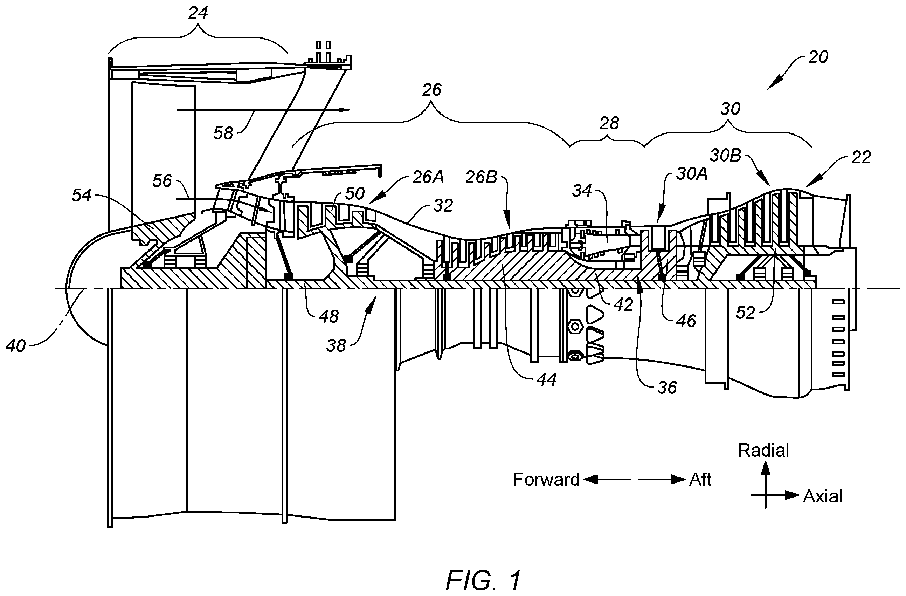

FIG. 1 schematically illustrates a cutaway, side view of a propulsion system 20 for an aircraft. Briefly, the aircraft may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV; e.g., a drone).

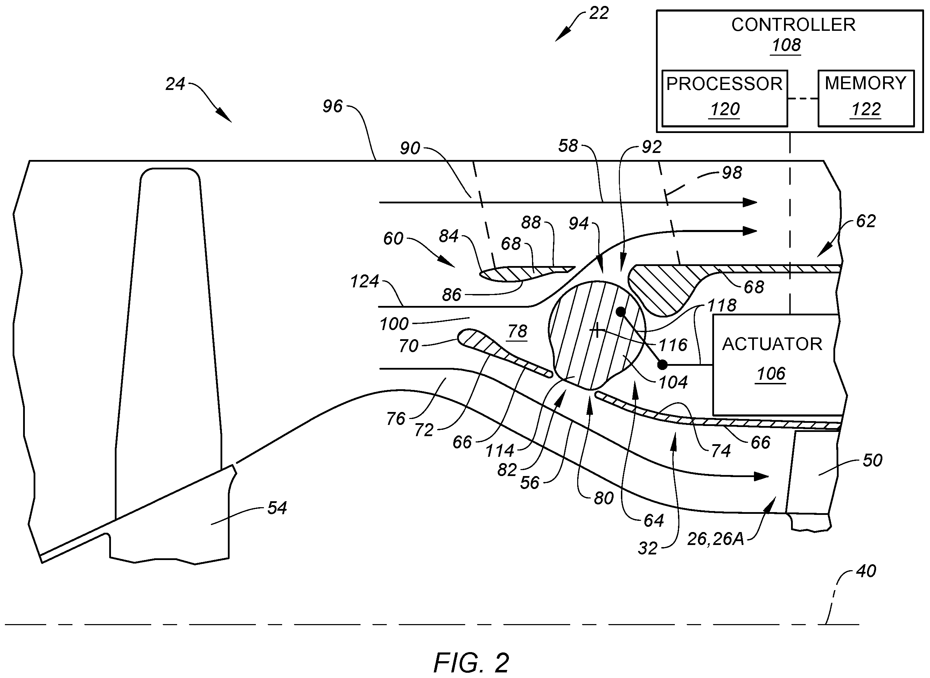

The propulsion system 20 of FIG. 1 includes a gas turbine engine 22. The gas turbine engine 22 of FIG. 2 is configured as a multi-spool turbofan gas turbine engine. However, while the following description and accompanying drawings may refer to the turbofan gas turbine engine of FIG. 1 as an example, it should be understood that aspects of the present disclosure may be equally applicable to other types of gas turbine engines including, but not limited to, a turboshaft gas turbine engine, a turboprop gas turbine engine, a turbojet gas turbine engine, or a propfan (e.g., an open rotor) gas turbine engine.

The gas turbine engine 22 of FIG. 1 includes a fan section 24, a compressor section 26, a combustor section 28, a turbine section 30, and an engine static structure 32. The compressor section 26, the combustor section 28, and the turbine section 30 may collectively be referred to as an "engine core" of the gas turbine engine 22. The compressor section 26 includes a low-pressure compressor (LPC) 26A and a high-pressure compressor (HPC) 26B. The combustor section 28 includes a combustor 34 (e.g., an annular combustor). The turbine section 30 includes a high-pressure turbine (HPT) 30A and a low-pressure turbine (LPT) 30B.

Components of the fan section 24, the compressor section 26, and the turbine section 30 form a first rotational assembly 36 (e.g., a high-pressure spool) and a second rotational assembly 38 (e.g., a low-pressure spool) of the gas turbine engine 22. The first rotational assembly 36 and the second rotational assembly 38 are mounted for rotation about a rotational axis 40 (e.g., an axial centerline) of the gas turbine engine 22 relative to the engine static structure 32.

The first rotational assembly 36 includes a first shaft 42, a bladed first compressor rotor 44 for the high-pressure compressor 26B, and a bladed first turbine rotor 46 for the high-pressure turbine 30A. The first shaft 42 interconnects the bladed first compressor rotor 44 and the bladed first turbine rotor 46.

The second rotational assembly 38 includes a second shaft 48, a bladed second compressor rotor 50 for the low-pressure compressor 26A, a bladed second turbine rotor 52 for the low-pressure turbine 30B, and a bladed fan rotor 54 for the fan section 24. The second shaft 48 of FIG. 2 interconnects the bladed second compressor rotor 50 and the bladed second turbine rotor 52. The second shaft 48 may additionally interconnect the bladed second turbine rotor 52 with the bladed fan rotor 54. Alternatively, the bladed fan rotor 54 may be operably coupled to the second shaft 48 by a gear train (e.g., a reduction gear assembly) configured to drive rotation of the bladed fan rotor 54 at a different rotational speed than the second shaft 48. The first shaft 42 and the second shaft 48 may be concentric and configured to rotate about the rotational axis 40. The present disclosure, however, is not limited to concentric configurations of the first shaft 42 and the second shaft 48.

The engine static structure 32 may include one or more engine cases, cowlings, bearing assemblies, and/or other non-rotating structures configured to house and/or support (e.g., rotationally support) components of the gas turbine engine 22 sections 24, 26, 28, 30.

In operation of the gas turbine engine 22 of FIG. 2, ambient air is directed through the fan section 24 and into a core flow path 56 (e.g., an annular flow path) and a bypass flow path 58 (e.g., an annular flow path) facilitated by rotation of the bladed fan rotor 54. The air flow is directed into the core flow path 56 at an annular core inlet duct upstream of the low-pressure compressor 26A. Airflow along the core flow path 56 is compressed by the low-pressure compressor 26A and the high-pressure compressor 26B, mixed and burned with fuel in the combustor 34, and then directed through the high-pressure turbine 30A and the low-pressure turbine 30B. The bladed first turbine rotor 46 and the bladed second turbine rotor 52 rotationally drive the first rotational assembly 36 and the second rotational assembly 38, respectively, in response to the combustion gas flow through the high-pressure turbine 30A and the low-pressure turbine 30B. The bypass flow path 58 may be disposed outside the engine static structure 32. For example, the engine static structure 32 and an outer aircraft propulsion system housing (e.g., a nacelle) may form an annular bypass duct radially therebetween, and airflow may be directed through the annular bypass duct along the bypass flow path 58.

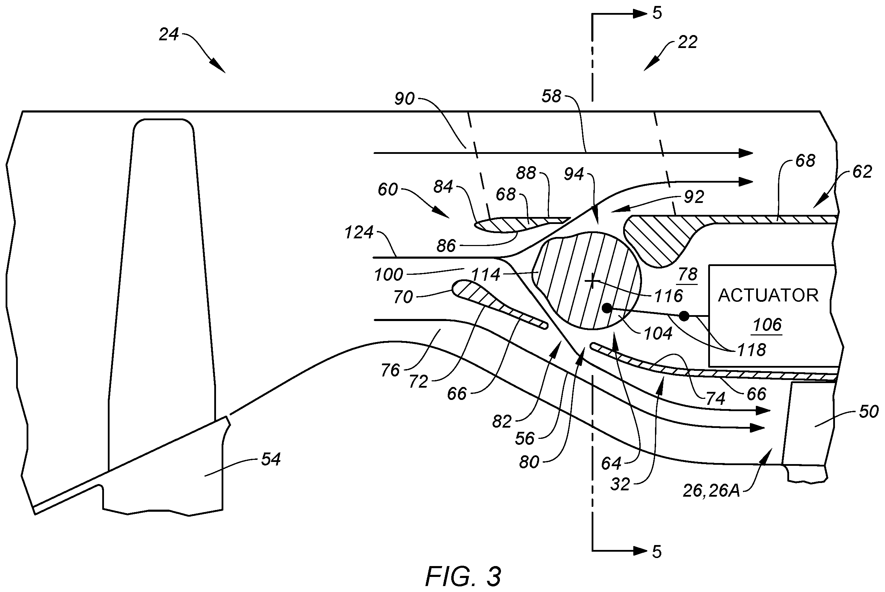

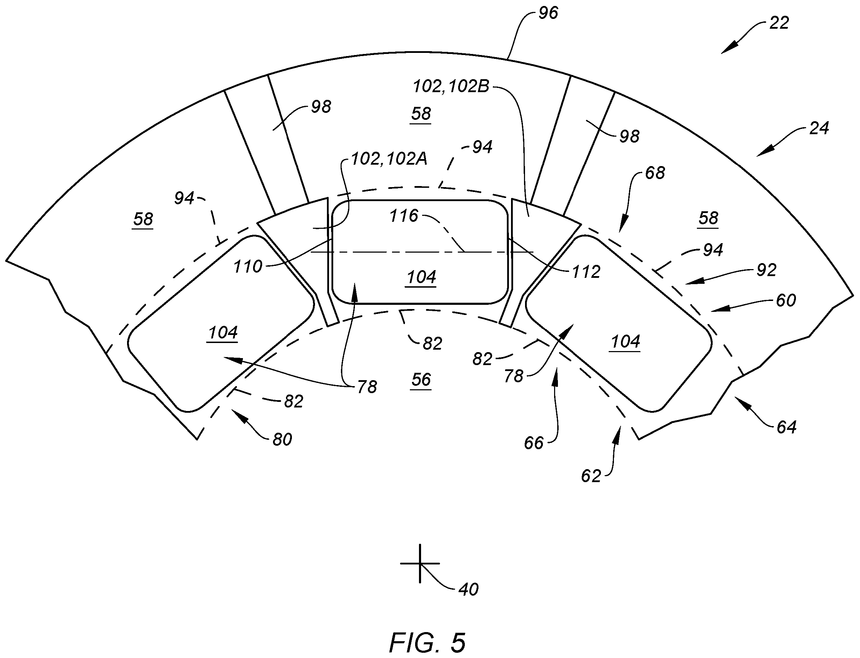

Referring to FIGS. 2-5, the gas turbine engine 22 further includes a core-bypass splitter assembly 60. The splitter assembly 60 of FIGS. 2-5 includes a splitter structure 62 and a splitter valve 64. FIGS. 2-4 illustrate cutaway, side view of the splitter assembly 60 for various positions of the splitter valve 64. FIG. 5 illustrates a cross-sectional view of a portion of the splitter assembly 60 taken along Line 5-5 of FIG. 3.

The splitter structure 62 includes an annular portion of the engine static structure 32 radially between and forming the core flow path 56 and the bypass flow path 58 downstream of the bladed fan rotor 54. The splitter structure 62 includes a radially inner structure member 66, a radially outer structure member 68, and a plurality of struts 102.

The inner structure member 66 extends circumferentially about (e.g., completely around) the rotational axis 40. The inner structure member 66 includes a leading edge 70. The inner structure member 66 further includes a radially inner side 72 and a radially outer side 74 extending downstream (e.g., aftward) from the leading edge 70. The inner structure member 66 forms an inlet 76 of the core flow path 56 at the leading edge 70. The inner side 72 forms a portion of the core flow path 56 (e.g., an outer radial boundary of the core flow path 56) at and downstream from the leading edge 70. For example, the inner side 72 may form the core flow path 56 from the inlet 76 to the compressor section 26 (e.g., the low-pressure compressor 26A). The outer side 74 forms an annular splitter cavity 78 (e.g., an inner radial boundary of the splitter cavity 78) radially between the inner structure member 66 and the outer structure member 68. The inner structure member 66 forms a splitter outlet 80 of the splitter cavity 78 to the core flow path 56. The splitter outlet 80 interconnects the splitter cavity 78 in fluid communication with the core flow path 56 downstream of the inlet 76. The splitter outlet 80 of FIGS. 2-5 is formed by a plurality of outlet passages 82 disposed downstream of the leading edge 70. Each of the outlet passages 82 extends through the inner structure member 66 from the outer side 74 (e.g., the splitter cavity 78) to the inner side 72 (e.g., the core flow path 56). The outlet passages 82 are arranged and may be equispaced circumferentially about the inner structure member 66 and the rotational axis 40 in an array (e.g., an annular array).

The outer structure member 68 extends circumferentially about (e.g., completely around) the rotational axis 40. The outer structure member 68 is disposed radially outward and spaced from the inner structure member 66. The outer structure member 68 includes a leading edge 84. The leading edge 84 is disposed downstream and/or aftward of the leading edge 70. The outer structure member 68 further includes a radially inner side 86 and a radially outer side 88 extending downstream (e.g., aftward) from the leading edge 84. The outer structure member 68 forms an inlet 90 of the bypass flow path 58 at the leading edge 84. The inner side 86 further forms the annular splitter cavity 78 (e.g., an outer radial boundary of the splitter cavity 78). The outer side 74 forms a portion of the bypass flow path 58 (e.g., an inner radial boundary of the bypass flow path 58) at and downstream from the leading edge 84. The outer structure member 68 forms a splitter outlet 92 of the splitter cavity 78 to the bypass flow path 58. The splitter outlet 92 interconnects the splitter cavity 78 in fluid communication with the bypass flow path 58 downstream of the inlet 90. The splitter outlet 92 of FIGS. 2-5 is formed by a plurality of outlet passages 94 disposed downstream of the leading edge 84. Each of the outlet passages 94 extends through the outer structure member 68 from the inner side 86 (e.g., the splitter cavity 78) to the outer side 88 (e.g., the bypass flow path 58). The outlet passages 94 are arranged and may be equispaced circumferentially about the outer structure member 68 and the rotational axis 40 in an array (e.g., an annular array). As shown in FIG. 5, the outer structure member 68 may be mounted to a fan case 96 of the engine static structure 32 by a plurality of struts 98 extending through the bypass flow path 58 from the fan case 96 to the outer structure member 68 (e.g., the outer side 88). The fan case 96 circumscribes the splitter assembly 60 and further forms the bypass flow path 58 (e.g., an outer radial boundary of the bypass flow path 58). The present disclosure, however, is not limited to the foregoing exemplary mounting configuration of the splitter structure 62 or its outer structure member 68.

The inner structure member 66 and the outer structure member 68 collectively form an annular splitter inlet 100 of the splitter cavity 78 at and extending between the leading edge 70 and the leading edge 84, respectively. The splitter inlet 100 is disposed downstream of and faces the bladed fan rotor 54. The splitter inlet 100 is disposed between (e.g., radially between) the core flow path 56 and the bypass flow path 58. The struts 102 extend radially between and interconnect the inner structure member 66 and the outer structure member 68. The struts 102 are arranged and may be equispaced circumferentially about the inner structure member 66 and the rotational axis 40 in an array (e.g., an annular array). The inner structure member 66 and the outer structure member 68 form a fixed-geometry structure of the splitter structure 62.

The splitter valve 64 includes a plurality of cam members 104 and an actuator 106. The splitter valve 64 may additionally include or be connected in communication with a controller 108. Each of the cam members 104 extends lengthwise between and to a first end 110 of the respective cam member 104 and a second end 112 of the respective cam member 104. Each of the cam members 104 is characterized by a cam profile extending between and to the first end 110 and the second end 112. As shown in FIGS. 2-4, this cam profile may be characterized by a generally cylindrical base and a protruding segment 114 which projects outward from the cylindrical base. Each of the cam members 104 is disposed circumferentially between a respective circumferentially-adjacent pair of the struts 102 with its first end 110 disposed at a first strut 102A and its second end 112 disposed at a second strut 102B. Each of the cam members 104 is rotatably mounted to the respective circumferentially-adjacent pair of the struts 102 about a rotational axis 116. Each of the cam members 104 may be disposed circumferentially coincident with a respective one of the outlet passages 82 and a respective one of the outlet passages 94.

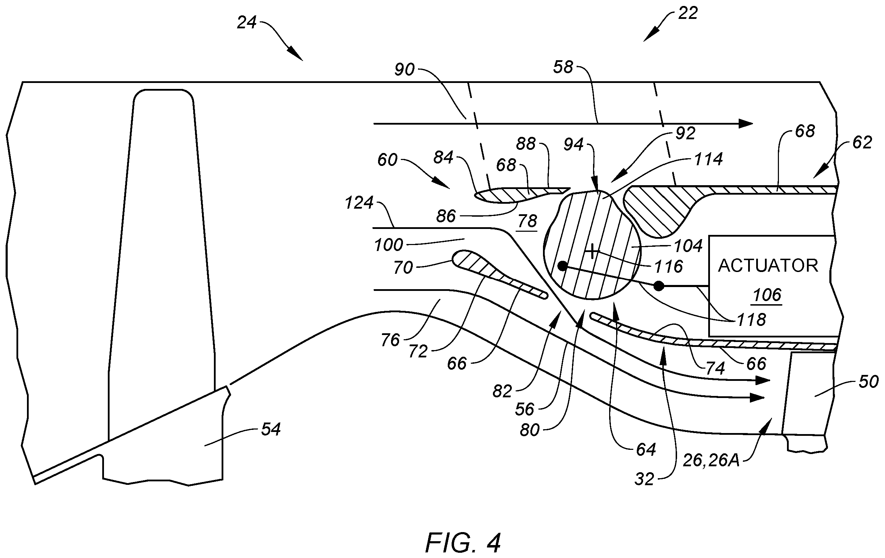

Each of the cam members 104 is rotatable about its rotational axis 116 between a plurality of rotational positions including at least (A) an inner radial position (FIG. 2), (B) an intermediate position (FIG. 3), and (C) an outer radial position (FIG. 4). In the inner radial position of the cam members 104, the protruding segment 114 is positioned at (e.g., within, adjacent, and/or proximate) the splitter outlet 80 to obstruct air flow from the splitter inlet 100 to the core flow path 56 through the splitter outlet 80. For example, the protruding segment 114 may be disposed at a respective one of the outlet passages 82. With the cam members 104 positioned in their respective inner radial positions, all or a substantial portion of air flow entering the splitter inlet 100 is directed through the splitter cavity 78 to the bypass flow path 58 through the splitter outlet 92. In the intermediate position of the cam members 104, the protruding segment 114 is disposed radially between the splitter outlet 80 and the splitter outlet 92, for example, extending toward the splitter inlet 100. With the cam members 104 in their respective intermediate positions, air flow entering the splitter inlet 100 is directed through the splitter cavity 78 to the core flow path 56 through the splitter outlet 80 and to the bypass flow path 58 through the splitter outlet 92. In the outer radial position of the cam members 104, the protruding segment 114 is positioned at (e.g., within, adjacent, and/or proximate) the splitter outlet 92 to obstruct air flow from the splitter inlet 100 to the bypass flow path 58 through the splitter outlet 92. For example, the protruding segment 114 may be disposed at a respective one of the outlet passages 94. With the cam members 104 positioned in their respective outer radial positions, all or a substantial portion of air flow entering the splitter inlet 100 is directed through the splitter cavity 78 to the core flow path 56 through the splitter outlet 80.

The actuator 106 is operably coupled with each of the cam members 104 to effect rotation of each of the cam members 104 about their respective rotational axes 116. In particular, the actuator 106 is configured to effect rotation of each of the cam members 104 to control the positions of the cam members 104 in at least their respective inner radial positions, intermediate positions, and outer radial positions. The actuator 106 may be coupled with each of the cam members 104 by one or more linkages 118 (e.g., pivotable linkages), for example, at the first end 110 and/or the second end 112. The actuator 106 may be configured as a linear actuator as shown, for example, in FIGS. 2-4. The actuator 106 may be configured as an electromechanical actuator, a hydraulic actuator, a pneumatic actuator, or the like, and the present disclosure is not limited to any particular configuration of the actuator 106. The actuator 106 may be disposed within the splitter cavity 78 (e.g., aftward of the cam members 104). Alternatively, portions of the actuator 106 may be disposed outside of the splitter cavity 78.

Referring to FIG. 2, the propulsion system 20 may include the controller 108. The controller 108 may be connected in signal communication with the actuator 106 and configured to control the actuator 106 to effect positioning of the cam members 104. The controller 108 includes a processor 120 connected in signal communication with memory 122. The processor 120 may include any type of computing device, computational circuit, processor(s), central processing unit (CPU), graphics processing unit (GPU), computer, or the like capable of executing a series of instructions that are stored in the memory 122. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the controller 108 and its processor 120 to accomplish the same algorithmically and/or by coordination of propulsion system 20 components including, but not limited to, the splitter valve 64 and its actuator 106. The memory 122 may include a single memory device or a plurality of memory devices (e.g., a computer-readable storage device that can be read, written, or otherwise accessed by a general purpose or special purpose computing device, including any processing electronics and/or processing circuitry capable of executing instructions). The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly and/or indirectly coupled to the controller 108. The controller 108 may include, or may be in communication with, a user interface including one or more inputs devices and/or one or more output devices, for example, an input device that enables a user to enter data and/or instructions and an output device configured to display information (e.g., a visual display or a printer), or to transfer data, etc. Communications between the controller 108 and external electrical or electronic devices may be via a hardwire connection or via a wireless connection. A person of skill in the art will recognize that portions of the controller 108 may assume various forms (e.g., digital signal processor, analog device, etc.).

The controller 108 may form or otherwise be part of an engine control unit (ECU) for the propulsion system 20. The ECU may control operating parameters of the gas turbine engine 22 including, but not limited to, fuel flow, variable vane positions, compressor bleed air, shaft 42, 48 torque and/or rotation speed, etc. so as to control an engine power or performance of the gas turbine engine 22. In some embodiments, the ECU may be part of a full authority digital engine control (FADEC) system for the propulsion system 20.

The scoop-like aerodynamical splitter structure 62 captures a portion of the fan blade exit flow from the bladed fan rotor 54. This air flow, schematically illustrated in FIGS. 2-4 as air flow 124, is directed into the splitter cavity 78 through the splitter inlet 100 and out of the splitter cavity 78 through the splitter outlet 80 and/or the splitter outlet 92. The splitter valve 64 operates to facilitate selective control of the air flow 124 through the splitter cavity 78 to the core flow path 56 through the splitter outlet 80 and/or the bypass flow path 58 through the splitter outlet 92. For example, the memory 122 may include instructions which, when executed by the processor 120, cause the controller 108 to control the actuator 106 to facilitate selective positioning of the cam members 104. The controller 108 may therefore control positions of the cam members 104 to vary a bypass ratio of the gas turbine engine 22 by directing the air flow 124 through the splitter cavity 78 to the core flow path 56 and/or the bypass flow path. Positions of the cam members 104 may be selected by the controller 108 responsive to different propulsion system 20 operating conditions. For example, during a cruising operational condition or when a greater propulsion system 20 bypass ratio is preferred, the controller 108 may control the actuator 106 to position each of the cam members 104 in their respective inner radial positions, thereby directing the air flow 124 (e.g., all or a substantial portion of the air flow 124) into the bypass flow path 58 downstream of the inlet 90. In some other propulsion system 20 operating conditions, such as during climb conditions, the controller 108 may control the actuator 106 to position each of the cam members 104 in their respective intermediate positions, thereby facilitating increased gas turbine engine 22 power while minimizing corresponding increases in the fan pressure ratio and fan bypass ratio. In still some other propulsion system 20 operating conditions, such as takeoff conditions or other operational conditions when a lower propulsion system 20 bypass ratio is preferred (e.g., high-power operating conditions), the controller 108 may control the actuator 106 to position each of the cam members 104 in their respective outer radial positions, thereby directing the air flow 124 (e.g., all or a substantial portion of the air flow 124) into the core flow path downstream of the inlet 76.

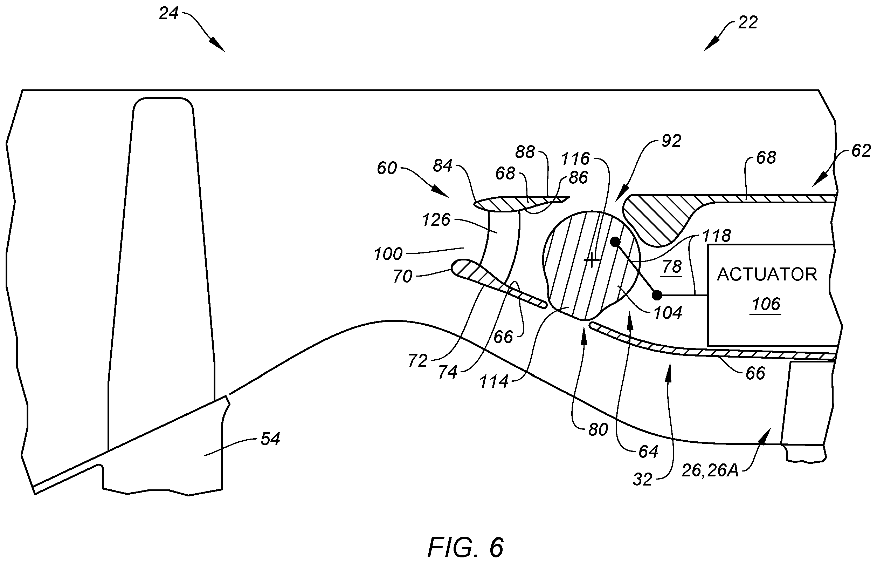

Referring to FIG. 6, in some embodiments, the splitter structure 62 may include a plurality of deswirling vanes 126. The deswirling vanes 126 are disposed at (e.g., on, adjacent, or proximate) the splitter inlet 100. The deswirling vanes 126 of FIG. 6 extend radially between and connect the inner structure member 66 (e.g., the outer side 74) and the outer structure member 68 (e.g., the inner side 86). The deswirling vanes 126 are arranged circumferentially about the inner structure member 66 and the rotational axis 40 in an array (e.g., an annular array). The deswirling vanes 126 are disposed between (e.g., axially between) the splitter inlet 100 and the cam members 104 such that the air flow 124 entering the splitter inlet 100 flows past the deswirling vanes 126 and is then directed through the splitter outlet 80 and/or the splitter outlet 92 by the cam members 104. One or more of the deswirling vanes 126 are disposed circumferentially coincident with each of the cam members 104.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A splitter assembly (60) for a gas turbine engine (22) of an aircraft propulsion system (20), the splitter assembly comprising:
a splitter structure (62) forming a splitter cavity (78), the splitter structure (62) including an inner structure member (66) and an outer structure member (68), the inner structure member (66) and the outer structure member (68) extending circumferentially about an axis (40), the inner structure member (66) including a first leading edge (70) relative to an air flow path (124) through the splitter cavity (78), the inner structure member (66) forming a first splitter outlet (80) of the splitter cavity (78), the outer structure member (68) disposed radially outward of the inner structure member (66), the outer structure member (68) including a second leading edge (84), the outer structure member (68) forming a second splitter outlet (92) of the splitter cavity (78),
the splitter structure (62) forming a splitter inlet (100) of the splitter cavity (78) between the first leading edge (70) and the second leading edge (84), the first splitter outlet (80) configured to be connected in fluid communication with a core flow path (56) of the gas turbine engine (22) radially inward of the splitter structure (62), the second splitter outlet (92) configured to be connected in fluid communication with a bypass flow path (58) of the gas turbine engine (22) radially outward of the splitter structure (62); and
a splitter valve (64) including a plurality of cam members (104) disposed within the splitter cavity (78), the plurality of cam members (104) arranged circumferentially about the axis (40), each of the plurality of cam members (104) positionable in an inner radial position, an outer radial position, and an intermediate position between the inner radial position and the outer radial position, the plurality of cam members (104) in the inner radial position obstructing the air flow path (124) from the splitter inlet (100) to the first splitter outlet (80), the plurality of cam members (104) in the outer radial position obstructing the air flow path (124) from the splitter inlet (100) to the second splitter outlet (92).

2. The splitter assembly of claim 1, wherein the splitter assembly (60) is configured to direct air flow along the air flow path (124) from the splitter inlet (100) to both the first splitter outlet (80) and the second splitter outlet (92) with the plurality of cam members (104) in the intermediate position.

3. The splitter assembly of claim 1 or 2, wherein the first leading edge (70) is disposed upstream of the second leading edge (84).

4. The splitter assembly of any preceding claim, wherein the splitter structure (62) further includes a plurality of deswirling vanes (126) arranged circumferentially about the axis (40), each of the plurality of deswirling vanes (126) extends between and connects the inner structure member (66) and the outer structure member (68), and the plurality of deswirling vanes (126) is disposed between the splitter inlet (100) and the plurality of cam members (104) along the air flow path (124).

5. The splitter assembly of any preceding claim, wherein the splitter valve (64) further includes an actuator (106) operably coupled with each of the plurality of cam members (104), and the actuator (106) is operable to selectively position the plurality of cam members (104) in the inner radial position, the outer radial position, or the intermediate position, optionally wherein the actuator (106) is disposed within the splitter cavity (78).

6. The splitter assembly of claim 5, further comprising a controller (108) connected in signal communication with the actuator (106), the controller (108) including a processor (120) connected in signal communication with a non-transitory memory (122) storing instructions which, when executed by the processor (120), cause the processor (120) to:
control the actuator (106) to position the plurality of cam members (104) in the inner radial position in a first operating condition of the gas turbine engine (22); and
control the actuator (106) to position the plurality of cam members (104) in the outer radial position in a second operating condition of the gas turbine engine (22), and the second operating condition is different than the first operating condition.

7. The splitter assembly of any preceding claim, wherein each of the plurality of cam members (104) includes a protruding segment (114) configured to be positioned at the first splitter outlet (80) in the inner radial position and the second splitter outlet (92) in the outer radial position.

8. A gas turbine engine (22) for an aircraft propulsion system (20), the gas turbine engine (22) comprising:
an engine core extending along an axis (40) of the gas turbine engine (22), the engine core including a compressor section (26), a combustor section (28), and a turbine section (30), the engine core forming a core flow path (56) extending through the compressor section (26), the combustor section (28), and the turbine section (30);
a bypass flow path (58) disposed radially outward of the engine core; and
a splitter assembly (60) disposed radially between and forming the core flow path (56) and the bypass flow path (58), the splitter assembly (60) including a splitter structure (62) and a splitter valve (64),
the splitter structure (62) extending circumferentially about the axis (40), the splitter structure (62) forming a splitter cavity (78), the splitter structure (62) further forming a splitter inlet (100), a first splitter outlet (80), and a second splitter outlet (92) of the splitter cavity (78), the splitter inlet (100) disposed radially between the core flow path (56) and the bypass flow path (58), the first splitter outlet (80) disposed at the core flow path (56), the second splitter outlet (92) disposed at the bypass flow path (58), and
the splitter valve (64) including a plurality of cam members (104) disposed within the splitter cavity (78), the plurality of cam members (104) arranged circumferentially about the axis (40), each of the plurality of cam members (104) positionable in an inner radial position, an outer radial position, and an intermediate position between the inner radial position and the outer radial position, the plurality of cam members in the inner radial position obstructing an air flow path (124) through the splitter cavity (78) from the splitter inlet (100) to the first splitter outlet (80), the plurality of cam members (104) in the outer radial position obstructing the air flow path (124) through the splitter cavity (78) from the splitter inlet (100) to the second splitter outlet (92).

9. The gas turbine engine of claim 8, wherein the splitter structure (62) includes an inner structure member (66) and an outer structure member (68), the inner structure member (66) and the outer structure member (68) extend circumferentially about the axis (40), the inner structure member (66) forms the core flow path (56), the outer structure member (68) forms the bypass flow path (58), and the inner structure member (66) and the outer structure member (68) collectively form the splitter cavity (78) and the splitter inlet (100).

10. The gas turbine engine of claim 9, wherein:
the inner structure member (66) includes a first leading edge (70), the first leading edge (70) forms a core flow path inlet (76) of the core flow path (56), and the first splitter outlet (80) is connected in fluid communication with the core flow path (56) downstream of the core flow path inlet (76); and/or
the outer structure member (68) includes a second leading edge (84), the second leading edge (84) forms a bypass flow path inlet (90) of the bypass flow path (58), and the second splitter outlet (92) is connected in fluid communication with the bypass flow path (58) downstream of the bypass flow path inlet (90).

11. The gas turbine engine of claim 9 or 10, wherein:
the splitter structure (62) includes a plurality of struts (102) extending between and connecting the inner structure member (66) and the outer structure member (68), and each of the plurality of cam members (104) is rotatable mounted between a respective circumferentially-adjacent pair of the plurality of struts (102); and/or
the splitter structure (62) further includes a plurality of deswirling vanes (126) arranged circumferentially about the axis (40), each of the plurality of deswirling vanes (126) extends between and connects the inner structure member (66) and the outer structure member (68), and the plurality of deswirling vanes (126) is disposed between the splitter inlet (100) and the plurality of cam members (104).

12. The gas turbine engine of any of claims 8 to 11, wherein the splitter assembly (60) is configured to direct air flow through the splitter cavity (78) from the splitter inlet (100) to both the first splitter outlet (80) and the second splitter outlet (92) with the plurality of cam members (104) in the intermediate position.

13. The gas turbine engine of any of claims 8 to 12, wherein:
the first splitter outlet (80) includes a plurality of first outlet passages (82) arranged about the axis (40); and/or
the second splitter outlet (92) includes a plurality of second outlet passages (94) arranged about the axis (40).

14. A method for operating a splitter assembly (60) of a gas turbine engine (22) for an aircraft propulsion system (20), the method comprising:
directing an air flow through a fan section (24) and into a core flow path (56) and a bypass flow path (58) by rotating a bladed fan rotor (54);
separating the air flow into the core flow path (56) and the bypass flow path (58) with the splitter assembly (60); and
operating the splitter assembly (60) to selectively direct a portion of the air flow from a splitter inlet (100) of the splitter assembly (60) to one or both of the core flow path (56) or the bypass flow path (58), selectively directing the portion of the air flow including positioning a splitter valve (64) of the splitter assembly (60) to direct the portion of the air flow from the splitter inlet (100) to one of:
the core flow path (56) through a first splitter outlet (80) of the splitter assembly (60);
the bypass flow path (58) through a second splitter outlet (92) of the splitter assembly (60); and
the core flow path (56) and the bypass flow path (58) through the first splitter outlet (80) and the second splitter outlet (92), respectively.

15. The method of claim 14, wherein operating the splitter assembly (60) includes positioning the splitter valve (64) to direct the portion of the air flow from the splitter inlet (100) to the core flow path (56) in a first operating condition of the aircraft propulsion system (20) and positioning the splitter valve (64) to direct the portion of the air flow from the splitter inlet (100) to the bypass flow path (58) in a second operating condition of the aircraft propulsion system (20), optionally wherein the first operating condition is a takeoff operating condition and the second operating condition is a cruising operating condition.
